# EUROPÄISCHE PATENTSCHRIFT

(11) **EP 3 049 644 B1**
(45) Veröffentlichungstag und Bekanntmachung des Hinweises auf die Patenterteilung: **02.08.2017**
(21) Anmeldenummer: 14766969.1
(22) Anmeldetag: 15.09.2014
(51) Int. Cl.: F01K 27/02

(54) **KRAFTWERK MIT GASTURBINE UND WASSERSTOFFGEKÜHLTEM GENERATOR**
POWER STATION HAVING A GAS TURBINE AND A HYDROGEN-COOLED GENERATOR
CENTRALE ÉQUIPÉE D'UNE TURBINE À GAZ ET D'UN GÉNÉRATEUR REFROIDI À L'HYDROGÈNE

(30) Priorität: 27.09.2013 DE 102013219548
(43) Veröffentlichungstag der Anmeldung: 03.08.2016
(73) Patentinhaber: Siemens Aktiengesellschaft, 80333 München (DE)
(72) Erfinder: GRAU SORARRAIN, Esteban, 40217 Düsseldorf (DE); JÄKEL, Christian, 47169 Duisburg (DE); KOEBE, Mario, 45478 Mülheim an der Ruhr (DE); KOWALSKI, Matthias, 45478 Mülheim an der Ruhr (DE); LEHMANN, Christoph, 47506 Neukirchen-Vluyn (DE); MASHKIN, Andrey, 50672 Köln (DE); PLOTNIKOVA, Olga, 42369 Wuppertal (DE); SCHILD, Carolin, 45478 Mülheim an der Ruhr (DE)
(86) Internationale Anmeldenummer: PCT/EP2014/069583
(87) Internationale Veröffentlichungsnummer: WO 2015/043992

(56) Entgegenhaltungen:
- EP-A1- 1 580 868
- EP-A1- 2 196 633

## Beschreibung

Kraftwerk mit Gasturbine und wasserstoffgekühltem Generator Die Erfindung betrifft ein Kraftwerk mit einer Gasturbine und einen von der Gasturbine zur Erzeugung von elektrischer Energie angetriebenen wasserstoffgekühlten Generator gemäß dem Oberbegriff des Anspruchs 1.

Es ist seit langem allgemein bekannt die Verlustwärme in Generatoren mittels eines Kühlgases abzuführen. Hierbei wurde ursprünglich als Kühlgas Luft vorgesehen. Allerdings sind luftgekühlte Generatoren nur für niedrige Leistungen bis maximal 300 MVA vorgesehen, da die mit Luft erzielbare Kühlwirkung zwangsläufig begrenzt ist und daher bei höheren Leistungen mit Luft nicht die erforderliche Kühlung gewährleistet ist.

Für Generatoren höherer Leistung wird als Kühlstoff bevorzugt Wasserstoffgas eingesetzt, welches gegenüber Luft eine deutlich höhere Kühlleistung ermöglicht, die zudem weiter erhöht werden kann, indem man das Wasserstoffgas unter Druck setzt und die Kühlung unter Überdruck durchführt. Da Wasserstoff eine höhere Wärmekapazität und eine höhere Wärmeleitfähigkeit als Luft aufweist, kann durch die Füllung des Generatorgehäuses mit Wasserstoff die Wärme besser vom Generator abgeleitet werden, als dies mit Luft möglich wäre. Allerdings erfordert die Kühlung mit Wasserstoffgas einen zusätzlichen, nicht unbeträchtlichen Aufwand, der sich sowohl bei der Anschaffung als auch später im Betrieb kostenmäßig auswirkt. Aus der EP 1 580 868 A1 ist ein solcher wasserstoffgekühlter Generator bekannt, bei dem der Wasserstoff in einem geschlossenen Kreislauf den Generator durchströmt. Aus der EP 2 196 633 A1 ist ein separater Kreislauf mit einer Abführleitung zum Abführen von erwärmten Wasserstoff aus dem Generator bekannt. Gasturbinen können mit den verschiedensten Brennstoffen oder Brennstoffgemischen betrieben werden. Aktuelle Entwicklungen gehen dahin, dass aufgrund des zunehmenden Überangebots an elektrischer Energie beispielsweise aus regenerativen Quellen dieses zeitweise Überangebot zunehmend zur Wasserstoffgenerierung benutzt wird und dieser Wasserstoff dann zusammen mit einem weiteren Brenngas, wie zum Beispiel nach der Vermischung mit Erdgas durch Verbrennung in Gasturbinen wieder in elektrische Energie umgewandelt wird.

Aufgabe der Erfindung ist es nun, ein Kraftwerk, das eine solche Gasturbine und einen von der Gasturbine zur Erzeugung von elektrischer Energie angetriebenen wasserstoffgekühlten Generator umfasst, soweit zu verbessern, dass ein optimierter Betrieb des Kraftwerks möglich ist.

Diese Aufgabe wird mit dem Kraftwerk mit den Merkmalen des Anspruchs 1 gelöst.

Dadurch, dass der zur Kühlung des Generators eingesetzte Wasserstoff durch die Aufnahme der Verlustwärme des Generators erwärmt und über eine Mischstation in der er mit einem weiteren Brennstoff - vorzugsweise Erdgas - gemischt wird, einer Gasturbine zur Verbrennung zugeführt wird, kann der Wasserstoff effizienter genutzt werden. Zum einen kann nun der ansonsten im Wasserstoffkühlkreislauf notwendige Kühler zur Rückkühlung des Wasserstoffes eingespart werden, was zu einer Kostenersparnis führt. Zum anderen wird sich der Gesamtwirkungsgrad des Kraftwerks verbessern, da der Wasserstoff aus dem Wasserstoffkühlkreislauf der Gasturbine schon vorgewärmt zugeführt wird, so dass sich auch der Brennstoffverbrauch im Kraftwerk reduziert. Insgesamt lässt sich so der Betrieb des Kraftwerks optimieren.

Ist in der Abführleitung zusätzlich eine Trennvorrichtung angeordnet und so ausgebildet, dass lediglich Wasserstoff durchdringt, kann der Gasturbine ein Brennstoff mit einem sehr hohen Reinheitsgrad zugeführt werden.

Die Erfindung soll nun anhand der nachfolgenden Figuren beispielhaft erläutert werden. Es zeigen:
- FIG 1: schematisch ein aus dem Stand der Technik bekannter geschlossener Wasserstoffkühlkreislauf zum Kühlen eines Generators,
- FIG 2: schematisch eine erfindungsgemäße Anordnung von Generator und Gasturbine des Kraftwerks.

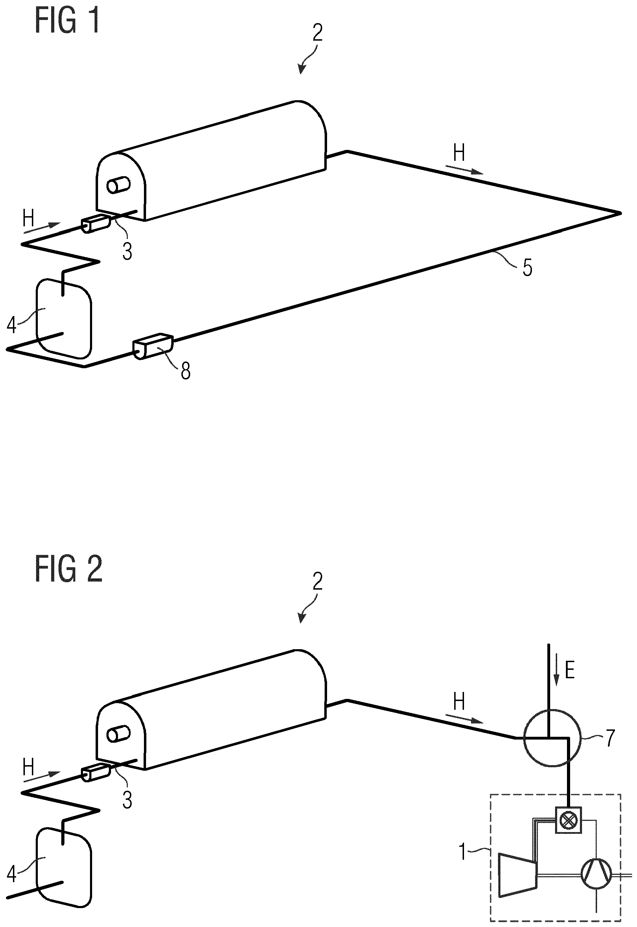

In FIG 1 ist schematisch ein wasserstoffgekühlter Generator 2 dargestellt. An einer Stirnseite des Generators 2 ist eine Zuleitung 3 angeordnet. An der anderen Stirnseite ist eine Abführleitung 5 angeordnet. Der wasserstoffgekühlte Generator 2 weist ein Gehäuse auf. In dem Gehäuse sind ein nicht näher dargestellter Stator und ein Rotor angeordnet. In einem Wasserstofftank ist Wasserstoff H gelagert. Der Wasserstoff H wird als Kühlstoff für den wasserstoffgekühlten Generator 2 eingesetzt, indem der Wasserstoff H vom Wasserstofftank über die Zuleitung 3 in den Generator 2 strömt und dort die erzeugte Verlustwärme des Generators aufnimmt. Anschließend strömt der aufgeheizte Wasserstoff H über die Abführleitung 5 und über einen nicht näher dargestellten Kühler zum Herunterkühlen des im Generator erwärmten Wassersoffs H zurück in den Wasserstofftank. Der Wasserstoff H durchläuft somit - sofern man von üblichen Verlusten durch Undichtigkeiten etc. absieht - einen weitgehend geschlossenen Kreislauf.

In FIG 2 ist nun schematisch die erfindungsgemäße Anordnung aus einer Gasturbine 1, dem von der Gasturbine 1 zur Erzeugung von elektrischer Energie angetriebenen Generator 2 und dem Wasserstoffkühlkreislauf zum Abführen von Verlustwärme aus dem Generator 2 dargestellt. Dadurch, dass die Abführleitung 5 nun mit einer Mischeinrichtung 7 verbunden ist, in der der erwärmte Wasserstoff H aus der Abführleitung 5 mit einem weiteren Brennstoff E mischbar ist, und diese Mischung über eine Brennstoffzuführleitung 6 der Gasturbine 1 zugeführt wird, muss der erwärmte Wasserstoff nicht mehr aufwändig in einem Kühler herunter gekühlt werden. Die dabei entstehende Verlustenergie muss nun nicht mehr verworfen werden, sondern kann sogar als vorgewärmtes Verbrennungsgas der Gasturbine zugeführt werden. Dadurch ist zwar ein offener Wasserstoffkühlkreislauf entstanden, das heißt es muss dem Generator 2 ständig neuer Wasserstoff H zugeführt werden, dagegen muss aber auf der Gasturbinenseite weniger Brennstoff zugeführt werden, so dass die reine Verbrauchsmengenbilanz nahezu identisch sein sollte. Da der der Gasturbine 1 zugeführte Wasserstoff aber vorgewärmt ist, kann bei der Gasturbine 1 bei gleicher Brennstoffmenge ein besserer Wirkungsgrad erreicht werden, was somit den Gesamtwirkungsgrad des Kraftwerks verbessert. Dieser kann noch weiter verbessert werden, wenn in der Abführleitung 5 eine Trennvorrichtung 8 zum Reinigen des im Generator 2 erwärmten Wasserstoffes vorgesehen ist. Zusätzliche in der Abführleitung 5 angeordnete - aber in FIG 2 nicht dargestellte - Regelarmaturen zur Regelung des Drucks und/oder der Durchflussmenge stellen den in den in die Mischeinrichtung 7 einströmenden und im Generator erwärmten Wasserstoffmassenstrom ein, um so ein für die Verbrennung in der Gasturbine optimales Mischungsverhältnis mit dem weiteren Brennstoff - wie zum Beispiel Erdgas - zu erzielen. Insgesamt ist mit der vorliegenden Erfindung somit sowohl aus Sicht der Verbrauchsstoffbilanz, das heißt der für den Betrieb des Kraftwerks benötigten Brennstoffe und Kühlstoffe, als auch aus Sicht des Gesamtwirkungsgrades ein optimierter Betrieb des Kraftwerks möglich.

## Patentansprüche

1. Kraftwerk mit einer Gasturbine (1), einem von der Gasturbine (1) zur Erzeugung von elektrischer Energie angetriebenen Generator (2), und einem Wasserstoffkühlkreislauf zum Abführen von Verlustwärme aus dem Generator (2), wobei der Wasserstoffkühlkreislauf eine Zuleitung (3) zum Zuleiten von Wasserstoff (H) aus einem Wasserstofftank (4) in den Generator (2) und eine Abführleitung (5) zum Abführen von erwärmtem Wasserstoff (H) aus dem Generator (2) aufweist,
**dadurch gekennzeichnet, dass**
die Abführleitung (5) so mit einer Mischeinrichtung (7) verbunden ist, so dass der erwärmte Wasserstoff (H) aus der Abführleitung (5) mit einem weiteren Brennstoff (E) gemischt wird und diese Mischung über eine Brennstoffzuführleitung (6) der Gasturbine zugeführt wird.

2. Kraftwerk nach Anspruch 1,
**dadurch gekennzeichnet, dass**
der weitere Brennstoff (E) Erdgas ist.

3. Kraftwerk nach Anspruch 1 oder 2,
**dadurch gekennzeichnet, dass**
in der Abführleitung (5) eine Trennvorrichtung (8) zum Reinigen des erwärmten Wasserstoffs (H) vorgesehen ist.

4. Kraftwerk nach einem der vorherigen Ansprüche,
**dadurch gekennzeichnet, dass**
in der Abführleitung (5) angeordnete Regelarmaturen zur Regelung des Drucks und/oder der Durchflussmenge des in die Mischeinrichtung (7) strömenden erwärmten Wasserstoffs (H) vorgesehen sind.

## Claims

1. Power plant with a gas turbine (1), a generator (2) driven by the gas turbine (1) for generating electrical energy, and a hydrogen cooling circuit for discharging lost heat from the generator (2), the hydrogen cooling circuit having a feed line (3) for feeding hydrogen (H) from a hydrogen tank (4) into the generator (2) and a discharge line (5) for discharging heated hydrogen (H) from the generator (2),
**characterized in that**
the discharge line (5) is thus connected to a mixing device (7), so that the heated hydrogen (H) from the discharge line (5) is mixed with a further fuel (E) and this mixture is fed via a fuel feed line (6) to the gas turbine.

2. Power plant according to Claim 1,
**characterized in that**
the further fuel (E) is natural gas.

3. Power plant according to Claim 1 or 2,
**characterized in that**
a separating device (8) for cleaning the heated fuel (H) is provided in the discharge line (5).

4. Power plant according to one of the preceding claims,
**characterized in that**
control fittings arranged in the discharge line (5) for controlling the pressure and/or the flow rate of the heated hydrogen (H) flowing into the mixing device (7) are provided.

## Revendications

1. Centrale électrique comprenant une turbine (1) à gaz, une génératrice (2), entraînée par la turbine (1) à gaz pour produire de l'énergie électrique, et un circuit de refroidissement par de l'hydrogène pour évacuer de la chaleur perdue de la génératrice (2), le circuit de refroidissement par de l'hydrogène ayant un conduit (3) d'arrivée pour conduire de l'hydrogène (H) d'un réservoir (4) d'hydrogène à la génératrice (2) et un conduit (5) d'évacuation pour évacuer de l'hydrogène (H) chauffé de la génératrice (2)
**caractérisée en ce que**
le conduit (5) d'évacuation communique avec un dispositif (7) de mélange, de manière à mélanger l'hydrogène (H) chauffé du conduit (5) d'évacuation à un autre combustible (E) et à envoyer ce mélange à la turbine à gaz par un conduit (6) d'apport de combustible.

2. Centrale électrique suivant la revendication 1,
**caractérisée en ce que**
l'autre combustible (E) est du gaz naturel.

3. Centrale électrique suivant la revendication 1 ou 2,
**caractérisée en ce qu'**
un dispositif (8) de séparation est prévu dans le conduit (5) d'évacuation pour épurer l'hydrogène (H) chauffé.

4. Centrale électrique suivant l'une des revendications précédentes,
**caractérisée en ce que**
des robinets de réglage, montés dans le conduit (5) d'évacuation, sont prévus pour réguler la pression et/ou le débit de l'hydrogène (H) chauffé passant dans le dispositif (7) de mélange.
